# EUROPEAN PATENT SPECIFICATION

(11) **EP 3 190 899 B1**
(45) Date of publication and mention of the grant of the patent: **16.08.2023**
(21) Application number: 15839736.4
(22) Date of filing: 08.09.2015
(51) Int. Cl.: A23G 1/00, A23B 7/144, A23B 9/18, A23B 4/14, A23L 3/3409

(54) **METHODS OF REDUCING CONTAMINANTS IN COCOA BEANS**
VERFAHREN ZUR VERRINGERUNG VON VERUNREINIGUNGEN IN KAKAOBOHNEN
PROCEDES POUR REDUIRE LES CONTAMINANTS DANS DES FEVES DE CACAO

(30) Priority: 08.09.2014 US 201462047359 P
(43) Date of publication of application: 19.07.2017
(73) Proprietor: Archer Daniels Midland Company, Decatur, Illinois 62526 (US)
(72) Inventor: DANIAL, Mindy, NL-1541 LJ Koog Aan De Zaa (NL); DOANE, Perry, Decatur, Indiana 46733 (US); HEISTEK, Ronald, NL-1318 GC Almere (NL); JOHNSON, Aaron, Pocatello, Idaho 83204 (US); JOHNSON, Kevin C., Pocatello, Idaho 83204 (US)
(74) Representative: dompatent von Kreisler Selting Werner - Partnerschaft von Patent- und Rechtsanwälten mbB
(86) International application number: PCT/US2015/048855
(87) International publication number: WO 2016/040269

(56) References cited:
- WO-A1-02/05665
- WO-A1-2014/130539
- DE-A1- 4 426 648
- US-A- 4 331 692
- US-A- 4 904 289
- US-A1- 2002 182 104
- US-A1- 2007 134 380
- US-A1- 2008 268 097
- US-A1- 2011 085 934
- US-B1- 6 334 979
- Maciej Balawejder ET AL: "POTENTIAL OF OZONE UTILIZATION FOR REDUCTION OF PESTICIDE RESIDUE IN FOOD OF PLANT ORIGIN. A REVIEW", Rocz Panstw Zakl Hig, 1 January 2013 (2013-01-01), pages 13-18, XP055449050, Retrieved from the Internet: URL:http://agro.icm.edu.pl/agro/element/bw meta1.element.agro-05d97319-36a4-4ce3-af4e -02ac8300d3b7/c/02_RPZH_nr_1-2013_13.pdf [retrieved on 2018-02-07]

## Description

### TECHNICAL FIELD

The present invention relates generally to cocoa processing. More particularly, the present invention relates to methods for treating cocoa beans to reduce contaminants in the cocoa beans.

### BACKGROUND

Cocoa beans are grown and harvested from cocoa trees which typically grow in tropical regions, such as West Africa, Central America, South America, or South East Asia. The cocoa trees grow pods which include the cocoa beans. The harvesting and processing of the pods to obtain the cocoa beans is quite labor intensive.

Ripe pods are gathered, may be split, and are allowed to ferment in order to remove the cocoa beans contained therein. The fermentation is often performed by placing the pods in a heap, covering the pod heap with banana leaves, and allowing the pods to ferment. The fermentation ultimately results in the color and flavor properties associated with chocolate.

After fermentation, the fermented cocoa beans are allowed to dry, typically in the sun. However, at times, the fermented cocoa beans may be artificially dried by burning wood or other substances. Drying the fermented cocoa beans with burning results in cocoa beans that have a smoky off-flavor or smokiness. This smoky odor can remain with the cocoa bean all the through processing and result in cocoa products (i.e., cocoa liquor, cocoa powder, cocoa butter, or chocolate) that have a smoky odor. Such smoky odor may result in the cocoa beans and/or products produced therefrom to be rejected and/or de-valued.

In addition to smoky odors, cocoa beans that originate from Cameroon often have increased levels of polycyclic aromatic hydrocarbons (PAH) that may be of concern and also may indicate exposure of the cocoa beans to smoke and smoke compounds.

Thus, needs exists for ways to reduce the contaminants which can be present in cocoa beans.

### SUMMARY

In each of its various embodiments, the present invention helps fulfill these needs by disclosing methods of reducing contaminants in cocoa beans.

The present invention relates to a method of reducing contaminants in cocoa beans comprises placing the cocoa beans in contact with an effective amount of ozone necessary to reduce the level of contaminants in the cocoa beans as defined in the appended claims.

### DESCRIPTION OF THE DRAWINGS

The characteristics and advantages of the present disclosure may be better understood by reference to the accompanying figures, in which:
Figure 1 shows a system to treat cocoa beans with ozone.
Figure 2 shows the effect of one embodiment of the present invention on reduce smoky odors in cocoa beans.
Figure 3 shows another system to treat cocoa beans with ozone.

### DETAILED DESCRIPTION

According to the invention, a method of treating cocoa beans with ozone comprises placing cocoa beans in contact with ozone. The treatment helps remove contaminants, such as smokiness, other off odors and/or polycyclic aromatic hydrocarbons, from the cocoa beans. The treatment may also help remove other contaminants, such as microbes, from the cocoa beans.

According to the invention, an effective amount of ozone necessary to reduce a level of contaminants is placed in contact with the cocoa beans. The effective amount is at least 1,000 ppm of the ozone, such as at least 2,000 ppm of the ozone, at least 3,000 ppm of the ozone, at least 4,000 ppm of the ozone, at least 5,000 ppm of the ozone, between 1,000 and 10,000 ppm of the ozone, between 2,000 and 10,000 ppm of the ozone, between 4,000 and 10,000 ppm of the ozone, between 1,000 and 12,000 ppm of the ozone, between 2,000 and 12,000 ppm of the ozone, or between 4,000 and 12,000 ppm of the ozone. The effective amount of ozone may also be expressed in grams (g) of ozone per kilograms (kg) of material treated, such as the cocoa beans. The effect amount may be at least 1 g/kg, at least 2 g/kg, at least 3 g/kg, at least 4 g/kg, at least 5 g/kg, at least 6 g/kg, at least 7 g/kg, at least 8 g/kg, at least 9 g/kg, at least 10 g/kg, up to 15 g/kg, up to 26 g/kg, up to 30 g/kg, between 1-30 g/kg (including ranges including all integers between), between 2-25 g/kg, between 3-25 g/kg, between 3-25 g/kg, between 4-25 g/kg, or between 5-25 g/kg.

The ozone may be placed in contact with cocoa beans for an effective amount of time necessary to reduce a level of contaminants. The necessary amount of time is at least 4 hours, such as at least 6 hours, between 4-55 hours, or between 6-55 hours.

The ozone may be placed in contact with the cocoa beans at a relative humidity of at least 50%, at least 60%, at least 70%, at least 80%, at least 90%, between 50-90%, between 60-90%, between 70-90%, or between 80-90%.

The ozone may be placed into contact with the cocoa beans by placing the cocoa beans in a container and introducing the ozone into the container. The ozone may be drawn into or forced into the cocoa beans using a negative pressure to suck the ozone into the cocoa beans, a positive pressure to force the ozone into the cocoa beans, or a combination thereof. The ozone may be passed through the cocoa beans with an air flow, which may range from 30-70 liters/minutes. The ozone may be contacted with the cocoa bean in a batch process where a set amount of cocoa beans are contacted with the ozone, or in a continuous process where cocoa beans are being introduced into and removed from the container simultaneously. In various embodiment, the container may be a box, tank, or other container and may be constructed of wood, plastic, metal, or other material.

A system is also disclosed for removing contaminants from cocoa beans comprises a first portion of cocoa beans having a contaminant, means for reducing the contaminant in the cocoa beans, and a second portion of cocoa beans having a reduce amount of the contaminant. The means for reducing the contaminant in the cocoa beans comprises ozone, a device for placing the ozone in contact with the cocoa beans, or a combination thereof. The system may further comprise a third portion of cocoa beans that is in contact with an effective amount of ozone that reduces the level of contaminants in the cocoa beans. The contaminant may be a smoky odor, a different off odor, microbes, or combinations of any thereof.

In an embodiment, once the cocoa beans are treated with ozone, the cocoa beans may further be processed by: breaking and winnowing the cocoa beans to produce cocoa nibs and cocoa shells; alkalizing the cocoa nibs; roasting the cocoa nibs; cooling the roasted, cocoa nibs; grinding the cocoa nibs to produce cocoa liquor; pressing the cocoa liquor to produce cocoa butter and cocoa cake; and/or grinding the cocoa cake to produce cocoa powder.

In a further embodiment, lower cost, smoky cocoa beans may be obtained and treated with ozone to remove the smoky odor. Removal of the smoky odor will increase the value of the treated cocoa beans (and resulting cocoa products). The treated cocoa beans may be processed into various cocoa products (which would also have reduce smoky odor) or combined with non-smoky cocoa beans, thus, in effect producing higher quality and value cocoa beans from the lower quality/cost smoky cocoa beans.

### EXAMPLES

The present invention is further demonstrated by the examples that follow. Those having ordinary skill in the art will appreciate that variations of these Examples are possible within the scope of the invention.

### Example 1.

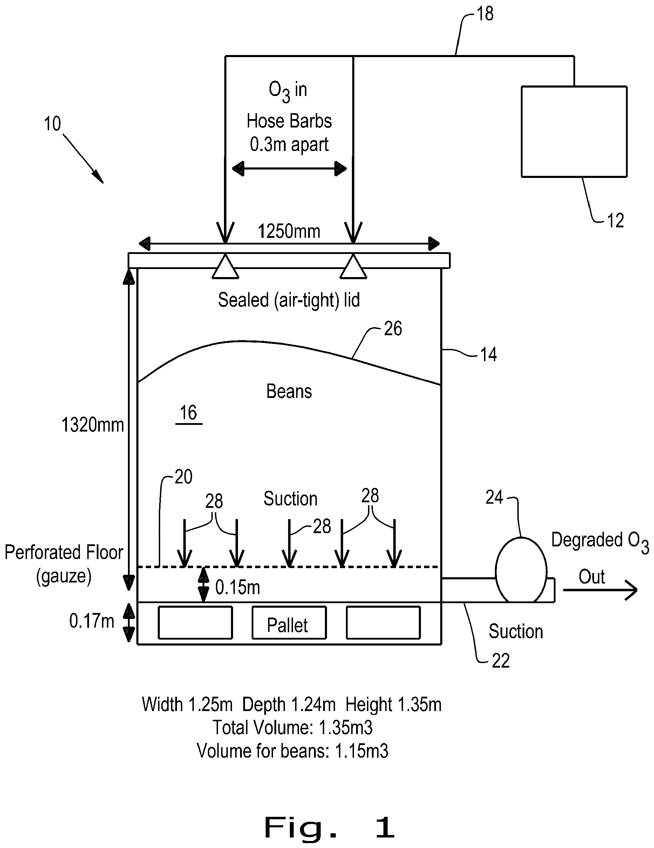

A system to treat cocoa beans with ozone is shown generally at 10 in FIG. 1. The system 10 includes an ozone generator 12 and a container 14 for holding cocoa beans 16. A conduit 18 is associated with the ozone generator 12 and container 14 in order to place ozone produced by the ozone generator 12 into the container 14 and in contact with the cocoa beans 16. The container 14 also includes a perforated floor 20 that the cocoa beans 16 sit on inside of the container 14. The container 14 is also associated with an exhaust 22 and a fan 24 that creates a negative pressure that draws or sucks the ozone introduced into the container 14 through an upper surface 26 of the cocoa beans 16 and through the performed floor 20 as illustrated by arrows 28. The ozone being pumped into the container 14 may also create a positive pressure that drives or forces the ozone into the cocoa beans 16. The combination of positive pressure and negative pressure helps force the ozone into the cocoa beans 16 such that an effective amount of ozone is able to reduce smoky odor and/or remove other contaminants within the cocoa beans 16.

### Example 2.

The system 10 for treating cocoa beans 16 of Example 1 was used to perform a number of trials of placing ozone in contact with smoky cocoa beans obtained from Cameroon. In these trials, batches of about 500 kg of smoky cocoa beans were placed into wooden boxes (i.e., the container 14 of FIG. 1) and treated with ozone. In order to ascertain the smoky odor and presence of contaminants in the cocoa beans before and after treatment with ozone, 3 kg samples of the cocoa beans were taken from the middle of the wooden boxes as the boxes were being filled with the cocoa beans before treatment, and three 3 kg samples of the cocoa beans were taken from wooden boxes as the boxes were being emptied, one sample from the top of the cocoa beans, one sample from the middle of the cocoa beans, and one sample from the bottom of the cocoa beans.

**Table 1 shows the various treatment conditions that were used to treat batches of smoky, Cameroon cocoa beans.**

| Trial no. | g. O₃/m³ | O₃ (ppm) | Air flow (L/min.) | Time (hrs) | Humidity present | Relative Humidity (%) |
|---|---|---|---|---|---|---|
| 1 | 20 | 9340 | 47 | 24 | yes | 67 |
| 2 | 10 | 4670 | 47 | 24 | yes | 67 |
| 3 | 10 | 4670 | 47 | 24 | no | |
| 4 | 10 | 4670 | 47 | 12 | yes | 82 |
| 5 | 10 | 4670 | 47 | 12 | no | |
| 6 | 10 | 4670 | 47 | 6 | yes | 78 |
| 7 | 10 | 4670 | 47 | 6 | no | |
| 8 | 5 | 2335 | 47 | 24 | yes | 82 |
| 9 | 5 | 2335 | 47 | 24 | no | |
| 10 | 5 | 2335 | 47 | 12 | yes | 82 |
| 11 | 5 | 2335 | 47 | 12 | no | |
| 12 | 20 | 9340 | 47 | 12 | yes | 83 |
| 13 | 20 | 9340 | 47 | 12 | no | |
| 14 | 20 | 9340 | 47 | 24 | yes | 83 |
| 15 | 20 | 9340 | 47 | 24 | no | |
| 16 | 20 | 9340 | 47 | 18 | yes | 86 |
| 17 | 5 | 2335 | 47 | 48 | yes | 67 |
| 18 | 5 | 2335 | 47 | 48 | no | |
| 19 | 2.5 | 1167.5 | 47 | 48 | yes | 67 |
| 20 | 2.5 | 1167.5 | 47 | 48 | no | |
| 21 | 20 | 9340 | 47 | 8 | yes | 67 |
| 22 | 20 | 9340 | 47 | 8 | no | |
| 23 | 10 | 4670 | 47 | 48 | yes | 63 |
| 24 | 10 | 4670 | 47 | 48 | no | |

After being treated, the cocoa beans were analyzed for smoky odor using a sensory panel. For odor tests of the cocoa beans, the smoky cocoa beans before and after treatment were compared against Ivory Coast cocoa beans. The treated and untreated cocoa beans were also processed into cocoa liquor and a sensory panel also evaluated the odor of the cocoa liquors from the treated and untreated cocoa beans. The cocoa liquor was produced by breaking and winnowing the cocoa beans. Boiling water was poured over the resulting cocoa nibs, mixed, and placed in an incubator at 100°C for 30 minutes. The nibs were dried in a fluid-bed dryer for 30 minutes at 120°C. Cocoa liquor was produced from these dried nibs. The cocoa liquor was subsequently analyzed for microbes and subjected to the sensory panel analysis for odor.

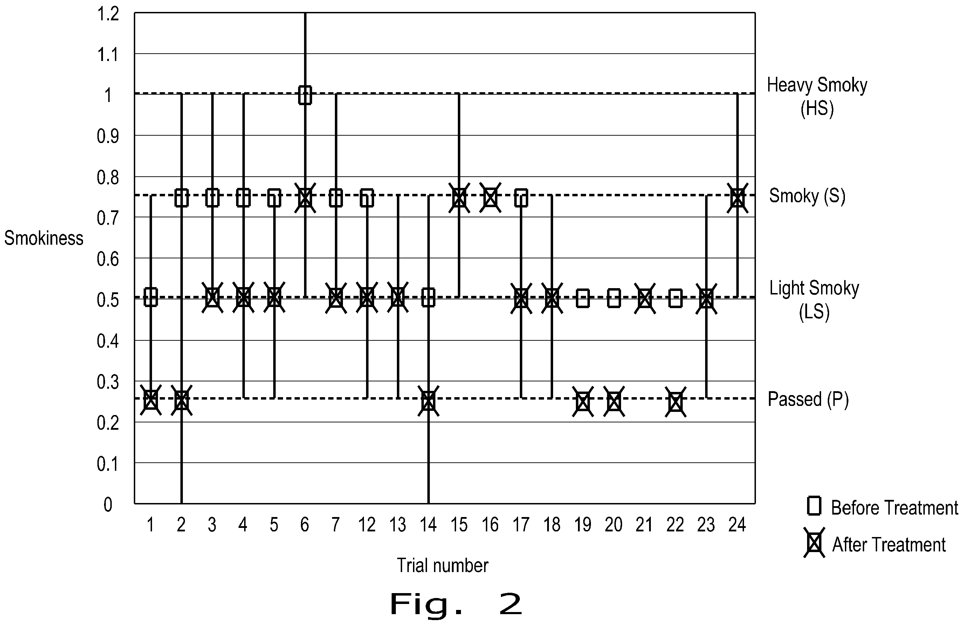

FIG. 2 shows the results of the sensory panel analysis of the treated and untreated cocoa beans. The results shown are averages of the samples taken for the trials. The panelists were asked to grade the odor of the treated or untreated cocoa beans as heavy smoky (HS), smoky (S), light smoky (LS), or passed (P) (i.e., not smoky). The results show that the higher the concentration of the ozone, the less smokiness was present in the treated cocoa beans. Thus, treating the smoky cocoa beans with ozone effectively reduced the smokiness associated with the cocoa beans.

The smokiness of cocoa liquor produced with untreated smoky cocoa beans and smoky beans treated with the amounts of ozone listed in Table 2 were also analyzed. The treated cocoa liquor samples were tasted and smelled to assess the smoky odor and the results are shown in Table 2.

**Table 2.**

| | Product | | |
|---|---|---|---|
| | Cocoa beans treated with 5g/m³ for 48 hrs. (trial 18) | Cocoa beans treated with 2.5g/m³ for 48 hrs. (trial 19) | Cocoa beans treated with 20g/m³ for 18 hrs. (trial 21) |
| Total difference of odor and flavor before and after ozone treatment | 5.2 | 5.2 | 3 |

Microbial counts of cocoa beans before and after treatment with ozone were also determined. Samples of treated and untreated cocoa beans from Trial 24 were taken and values (i.e., colony forming units (CFU) per mL) of the total plate count (TPC), molds, and yeasts were obtained. The results are presented in Table 3. As shown in Table 3, the ozone treatment effectively reduced the TPC, molds, and yeasts.

| Sample | TPC (CFU/mL) | Molds (CFU/mL) | Yeasts (CFU/mL) |
|---|---|---|---|
| Before treatment | 7.9 x 10⁵ | 2.2 x 10⁵ | 10³ |
| After treatment | 6.9 x 10⁴ | 2.5 x 10⁴ | 0 |

In addition to the ability of the ozone to reduce the smokiness and microbial contaminants in smoky cocoa beans, evaluations were also performed to assess the effect of ozone on colorability, pH, aroma profile, and fat oxidation. The results indicate that ozone did not negatively affect these parameters.

### Example 3.

Cocoa beans obtained from Cameroon having detected levels of polycyclic aromatic hydrocarbons (PAHs) were obtained. Some of these cocoa beans had a dry moisture content of less than 10%, and some of the cocoa beans were adjusted to 14% moisture (moist) with the addition of water and agitation. Samples of dry and moist beans were placed in chambers and exposed to dry ozone or humid ozone (having a relative humidity of greater than 60%) for 24 hours at a concentration of 20 g of ozone per kilogram of cocoa beans at a flow rate of ozone of 3.5 liters per minute. After treatment with ozone, samples of the untreated control and cocoa beans treated with ozone were evaluated for microbial content. Further, 100 grams of the untreated control and the ozone treated cocoa beans were fractionated by hand to separate the hull and nibs fractions of the cocoa beans. The hulls, nibs, and whole cocoa bean samples were analyzed for PAH content.

The results of these analyses are shown in Table 4.

| Table 4. Effect of ozone application on Smoke PAH¹ contamination (ng/g) | | | | | | |
|---|---|---|---|---|---|---|
| | Control | | Condition | | | |
| | | | Dry | | Moist | |
| Fraction | X̅ | SE | X̅ | SE | X̅ | SE |
| Hull | 80.6 | 17.7 | 33.9 | 6.4 | 40.8 | 14.4 |
| Nib | 0.70 | 0.19 | 0.28 | 0.04 | 0.31 | 0.05 |
| whole | 9.5 | 1.2 | 2.8 | 0.4 | 4.0 | 0.5 |
| | | | | | | |

| Effect of Ozone exposure on Microbial evaluation² of Whole beans. (CFU/g) | | | | | | |
|---|---|---|---|---|---|---|
| | Control | Condition | | | | |
| Assay | | Dry | Moist | | | |
| SPC | 1,191,667 | 250,000 | 230,000 | | | |
| Yeast | TNTC | <3 | <3 | | | |
| Mold | TNTC | 3 | 11.5 | | | |
| ¹Total PAH, the sum of benzo(a)anthracene, chrysene, benzo(b)fluoranthene, and benzo(a)pyrene. | | | | | | |
| ²TNTC = too numerous to count, <3 = below detection of assay. | | | | | | |

Table 4 indicates that the use of ozone decreased the level of PAH contamination in whole cocoa beans and the hulls. PAH levels were also improved in the nib fractions. The microbial levels on the whole cocoa beans was also improved, particularly in the yeast and mold levels which would enable the improved stability of cocoa beans in storage and/or reduced exposure of processing facilities to the yeasts and molds.

### Example 4.

Cocoa beans obtained from Cameroon having detected levels of polycyclic aromatic hydrocarbons (PAHs) were obtained. Some of these cocoa beans had a dry moisture content of less than 10%, and some of the cocoa beans were adjusted to 14% moisture (moist) with the addition of water and agitation. Samples of dry and moist beans were placed in chambers and exposed to dry ozone or humid ozone (having a relative humidity of greater than 60%) for 24 hours at a concentration of 20 g of ozone per kilogram of cocoa beans at a flow rate of ozone of 3.5 liters per minute. After treatment with ozone, samples of the untreated control and cocoa beans treated with ozone were evaluated for microbial content. Further, 100 grams of the untreated control and the ozone treated cocoa beans were fractionated by hand to separate the hull and nibs fractions of the cocoa beans. The hulls, nibs, and whole cocoa bean samples were analyzed for PAH content. The results of the analysis are presented in Table 5.

**Table 5.**

| Effect of ozone application method on PAH¹ contamination (ng/g) | | | |
|---|---|---|---|
| Bean Condition | | Ozone Application | |
| | Control | Dry O3 | Humid O3 |
| Dry | 68.2 | 26.7 | 22.7 |
| Moist | | 47.9 | 30.5 |
| Average | | 37.3 | 26.6 |
| ¹Total PAH, the sum of benzo(a)anthracene, chrysene, benzo(b)fluoranthene, and benzo(a)pyrene. | | | |

Table 5 indicates that the ozone was able to reduce the PAH content, and that the humid ozone was more able to significantly reduce the PAH content.

### Example 5.

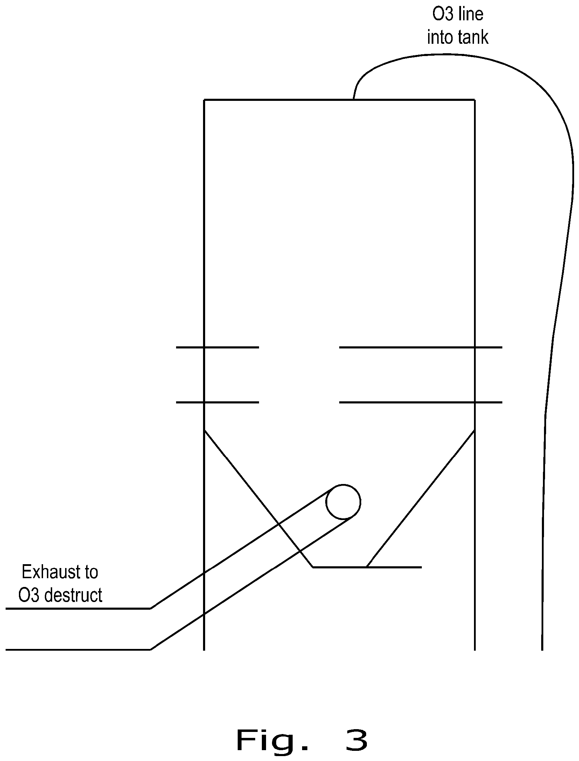

Cocoa beans were loaded into a stainless steel tank having an 2.4 m (8 feet) diameter and a 3.0 m (10 feet) height. Each batch of cocoa beans treated with ozone in this example contained about 5,000 kg of beans. The tank had a single line or inlet of ozone that entered the tank on the top, and the ozone traveled through the cocoa beans and exhausted from the tank as shown in FIG. 3. The cocoa beans were exposed to 1, 2.3, or k g of ozone per kg of cocoa beans. The relative humidity and process conditions of these trials are show in Table 6.

After ozone application, the cocoa beans were emptied from the bottom of the vessel and a sample was taken in the beginning, middle, and end of the emptying process. The smoky content of the cocoa beans were analyzed with a UV/VIS spectrophotometer. This example had a positive effect in removing smokiness in the cocoa beans.

**Table 6.**

| Table 6. Ozone application to Cocoa beans at commercial scale | | | | | | | |
|---|---|---|---|---|---|---|---|
| Trial No. | Ozone Exposure (g 0₃/kg beans) | Airflow¹ (L/min) | Run time (hr) | Humidity | RH (%) | Batch size (lbs) | Batch Size (kg) |
| 1 | 4 | 634.5 | 23 | yes | 80 | 12082 | 5492 |
| | | | | | | 11877 | 5399 |
| 2 | 1 | 211.5 | 20.5 | yes | 100 | 11323 | 5147 |
| | | | | | | 12235 | 5561 |
| 3 | 2.3 | 423 | 20.5 | yes | 100 | 12309 | 5595 |
| | | | 16* | | | 12370 | 5623 |
| 4 (Ref) | - | - | - | - | - | 27097 | 12317 |

| | | | | | | | |
|---|---|---|---|---|---|---|---|
| * In this trial, about 1 hour after starting the trial, the ozone generator stopped working and was restarted after about 4 hours. The obtain the right amount of ozone, the amount of ozone in the chambers was increased and the durations was shortened to about 14 hours a concentration of 4 grams of ozone per kilogram of cocoa beans. | | | | | | | |

After ozone application, the cocoa beans were processed from cocoa beans and into cocoa liquor, cocoa cake, and cocoa butter using techniques known by those of ordinary skill in the art. Various properties of the cocoa beans, cocoa liquor, cocoa cake, and cocoa butter were analyzed in order to evaluate the effectiveness of the ozone treatment on reducing certain contaminants. The results of such analyses are presented in Table 7. The PAH content refers to the total amounts of benzo(a)anthracene, chrysene, benzo(b)fluoranthene, and benzo(a)pyrene.

**Table 7.**

| | Trial 1 | Trial 2 | Trial 3 | Reference |
|---|---|---|---|---|
| Cocoa bean odor (Absorbance @325 nm) | 0.276 | 0.270 | 0.252 | 0.446 |
| -analyzed by colorimetric method | | | | |
| Cocoa bean microbial count | | 1.78 x 10⁴ CFU | | 1.6 x 10⁶ CFU |
| Cocoa liquor PAH content (ppb) | 6.4 | 6.8 | 8.0 | 9.6 |
| -Total PAH content as described herein | | | | |
| Cocoa butter PAH content (ppb) | 5.674 | 9.143 | 16.123 | 16.629 |
| - Total PAH content as described herein | | | | |

As can be seen in Table 7, the ozone treatments were able to successfully reduce various contaminants in the cocoa beans and fractions thereof.

While this invention has been particularly shown and described with references to exemplary embodiments thereof, it will be understood by those skilled in the art that various changes in form and details may be made therein without departing from the scope of the invention encompassed by the appended claims.

## Claims

1. A method of reducing contaminants in cocoa beans, the method comprising:
placing cocoa beans in contact with an effective amount of ozone, thus reducing a level of contaminants in the cocoa beans,
wherein said contaminants are selected from the group consisting of smoky odors, polycyclic aromatic hydrocarbons, and combinations thereof,
wherein the effective amount of ozone is at least 1,000 ppm,
wherein the effective amount of ozone ranges from 1,000-12,000 ppm or between 1 to 30 grams of ozone per kilogram of cocoa beans, and
wherein the cocoa beans are in contact with the effective amount of ozone for at least 4 hours.

2. The method according to claim 1, wherein the contaminant is a smoky odor.

3. The method according to any one of claims 1 or 2, wherein the cocoa beans are in contact with the effective amount of ozone for 4 to 55 hours.

4. The method according to any one of claims 1 to 3, wherein the cocoa beans are placed into contact with the effective amount of ozone at a relative humidity of at least 50%, preferably wherein the cocoa beans are placed into contact with the effective amount of ozone at a relative humidity of between 50-90%.

5. The method according to any one of claims 1 to 4, further comprising:
placing the cocoa beans having the contaminant in a container; and
introducing the effective amount of ozone into the container, thus placing the cocoa beans in contact with the effective amount of ozone.

6. The method according to any one of claims 1 to 5, further comprising passing the effective amount of ozone through the cocoa beans with an air flow.

7. The method according to claim 6, wherein the air flow ranges from 30-70 liters/minute.

8. The method according to any one of claims 1 to 7, wherein passing the effective amount of ozone through the cocoa beans comprises an act selected from the group consisting of creating negative pressure in the container such that the ozone flows through the cocoa beans, creating positive pressure in the container with the ozone such that the ozone flows through the cocoa beans, or a combination thereof.

9. The method according to any one of claims 1 to 8, wherein the method is a batch process or a continuous process.

## Patentansprüche

1. Verfahren zum Reduzieren der Menge von Kontaminanten in Kakaobohnen, wobei das Verfahren umfasst:
In-Kontakt-Bringen von Kakaobohnen mit einer wirksamen Menge Ozon, somit Reduzieren der Menge der Kontaminanten in den Kakaobohnen,
wobei die Kontaminanten aus der Gruppe ausgewählt sind, die aus Rauchgerüchen, polycyclischen aromatischen Kohlenwasserstoffen und Kombinationen davon besteht,
wobei die wirksame Menge Ozon wenigstens 1000 ppm beträgt,
wobei die wirksame Menge Ozon im Bereich von 1000-12000 ppm oder zwischen 1 und 30 Gramm Ozon pro Kilogramm Kakaobohnen liegt und
wobei die Kakaobohnen wenigstens 4 Stunden lang mit der wirksamen Menge Ozon in Kontakt sind.

2. Verfahren gemäß Anspruch 1, wobei der Kontaminant ein Rauchgeruch ist.

3. Verfahren gemäß einem der Ansprüche 1 oder 2, wobei die Kakaobohnen 4 bis 55 Stunden lang mit der wirksamen Menge Ozon in Kontakt sind.

4. Verfahren gemäß einem der Ansprüche 1 bis 3, wobei die Kakaobohnen bei einer relativen Feuchtigkeit von wenigstens 50% mit der wirksamen Menge Ozon in Kontakt gebracht werden, wobei vorzugsweise die Kakaobohnen bei einer relativen Feuchtigkeit von 50-90% mit der wirksamen Menge Ozon in Kontakt gebracht werden.

5. Verfahren gemäß einem der Ansprüche 1 bis 4, weiterhin umfassend:
Platzieren der Kakobohnen, die den Kontaminanten aufweisen, in einem Behälter; und
Einleiten der wirksamen Menge Ozon in den Behälter, somit In-Kontakt-Bringen der Kakaobohnen mit der wirksamen Menge Ozon.

6. Verfahren gemäß einem der Ansprüche 1 bis 5, weiterhin umfassend das Leiten der wirksamen Menge Ozon durch die Kakaobohnen mit einem Luftstrom.

7. Verfahren gemäß Anspruch 6, wobei der Luftstrom in einem Bereich von 30-70 Liter/Minute liegt.

8. Verfahren gemäß einem der Ansprüche 1 bis 7, wobei das Leiten der wirksamen Menge Ozon durch die Kakaobohnen eine Wirkung umfasst, die aus der Gruppe ausgewählt ist, die aus dem Erzeugen eines Unterdrucks in dem Behälter, so dass das Ozon durch die Kakaobohnen strömt, dem Erzeugen eines Überdrucks in dem Behälter mit dem Ozon, so dass das Ozon durch die Kakaobohnen strömt, oder einer Kombination davon besteht.

9. Verfahren gemäß einem der Ansprüche 1 bis 8, wobei das Verfahren ein diskontinuierliches Verfahren oder ein kontinuierliches Verfahren ist.

## Revendications

1. Procédé de réduction des contaminants dans les fèves de cacao, le procédé comprenant :
la mise des fèves de cacao en contact avec une quantité efficace d'ozone, réduisant ainsi le niveau de contaminants dans les fèves de cacao,
dans lequel lesdits contaminants sont choisis dans le groupe constitué d'odeurs de fumée, d'hydrocarbures aromatiques polycycliques et de combinaisons de ceux-ci,
dans lequel la quantité efficace d'ozone est d'au moins 1000 ppm,
dans lequel la quantité efficace d'ozone se trouve dans la plage allant de 1000 à 12000 ppm ou est comprise entre 1 et 30 grammes d'ozone par kilogramme de fèves de cacao, et
dans lequel les fèves de cacao sont en contact avec la quantité efficace d'ozone pendant au moins 4 heures.

2. Procédé selon la revendication 1, dans lequel le contaminant est une odeur de fumée.

3. Procédé selon l'une quelconque des revendications 1 ou 2, dans lequel les fèves de cacao sont en contact avec la quantité efficace d'ozone pendant 4 à 55 heures.

4. Procédé selon l'une quelconque des revendications 1 à 3, dans lequel les fèves de cacao sont mises en contact avec la quantité efficace d'ozone à une humidité relative d'au moins 50%, de préférence dans lequel les fèves de cacao sont mises en contact avec la quantité efficace d'ozone à une humidité relative comprise entre 50 et 90%.

5. Procédé selon l'une quelconque des revendications 1 à 4, comprenant en outre :
le placement des fèves de cacao contenant le contaminant dans un récipient ; et
l'introduction de la quantité efficace d'ozone dans le récipient, mettant ainsi les fèves de cacao en contact avec la quantité efficace d'ozone.

6. Procédé selon l'une quelconque des revendications 1 à 5, comprenant en outre le passage de la quantité efficace d'ozone à travers les fèves de cacao avec un débit d'air.

7. Procédé selon la revendication 6, dans lequel le débit d'air se trouve dans la plage allant de 30 à 70 litres/minute.

8. Procédé selon l'une quelconque des revendications 1 à 7, dans lequel le passage de la quantité efficace d'ozone à travers les fèves de cacao comprend un acte choisi dans le groupe constitué par la création d'une pression négative dans le récipient de sorte que l'ozone s'écoule à travers les fèves de cacao, la création d'une pression positive dans le récipient avec l'ozone de sorte que l'ozone s'écoule à travers les fèves de cacao, ou une combinaison de celles-ci.

9. Procédé selon l'une quelconque des revendications 1 à 8, dans lequel le procédé est un procédé discontinu ou un procédé continu.
